# EUROPÄISCHE PATENTSCHRIFT

(11) **EP 0 488 433 B1**
(45) Veröffentlichungstag und Bekanntmachung des Hinweises auf die Patenterteilung: **20.12.1995**
(21) Anmeldenummer: 91202540.0
(22) Anmeldetag: 01.10.1991
(51) Int. Cl.: C21B 9/12, F16K 49/00

(54) **Regelspiess für einen staubhaltige, heisse Gase führenden Kanal**
Regulating needle for a duct transporting dust-containing hot gases
Pointeau de réglage pour canal transportant du gaz poussiéreux et chaud

(30) Priorität: 16.11.1990 DE 4036487
(43) Veröffentlichungstag der Anmeldung: 03.06.1992
(73) Patentinhaber: METALLGESELLSCHAFT Aktiengesellschaft, 60015 Frankfurt (DE)
(72) Erfinder: Frank, Wolfgang, W-6236 Eschborn (DE); Löffler, Johannes, Dr., W-6380 Bad Homburg (DE); Holle, Norbert, W-6382 Friedrichsdorf 4 (DE)

(56) Entgegenhaltungen:
- DE-A- 2 364 385
- DE-C- 635 739
- GB-A- 940 007
- US-A- 3 259 143

## Beschreibung

Die Erfindung betrifft einen Regelspieß zum Schließen und Öffnen eines Durchlasses in einem ein staubhaltiges Gas mit Temperaturen von etwa 400 bis 1200° C führenden Kanal, wobei der Regelspieß einen in Längsrichtung bewegbaren Schaft und einen etwa kegelstumpfförmigen, mit dem Durchlaß zusammenwirkenden Kopf aufweist, der am Schaftende bewegbar angeordnet ist.

Ein Regelorgan dieser Art ist aus DE-C-635 739 bekannt. Es ist ferner bekannt, die Menge der durch eine Leitung oder einen Kanal fließenden Gase mittels bewegbarer Klappen zu regeln. Bei heißen, staubhaltigen Gasen führt dies aber zu raschem verschleiß oder zu Störungen in der Bewegbarkeit der Klappen.

Der Erfindung liegt deshalb die Aufgabe zugrunde, einen Regelspieß der eingangs genannten Art zu schaffen, der auch unter erschwerten Bedingungen funktionsfähig bleibt.

Erfindungsgemäß wird die Aufgabe dadurch gelöst, daß das Schaftende einen Boden aufweist, daß der Kopf federnd verspannt an der Außenseite des Bodens anliegt und daß der Bodenbereich des Schaftes eine Kammer aufweist, in welcher sich ein Ende eines vom Kopf ausgehenden Spannbolzens und eine mit dem Spannbolzen zusammenwirkende Feder befinden, wobei sich die Feder gegen den Spannbolzen und gegen die Innenseite des Bodens abstützt.

Einzelheiten des Regelspießes werden mit Hilfe der Zeichnung erläutert. Es zeigt:
- Fig. 1: eine Ansicht des Regelspießes in schematischer Darstellung und
- Fig. 2: das Kopfende des Regelspießes im Längsschnitt.

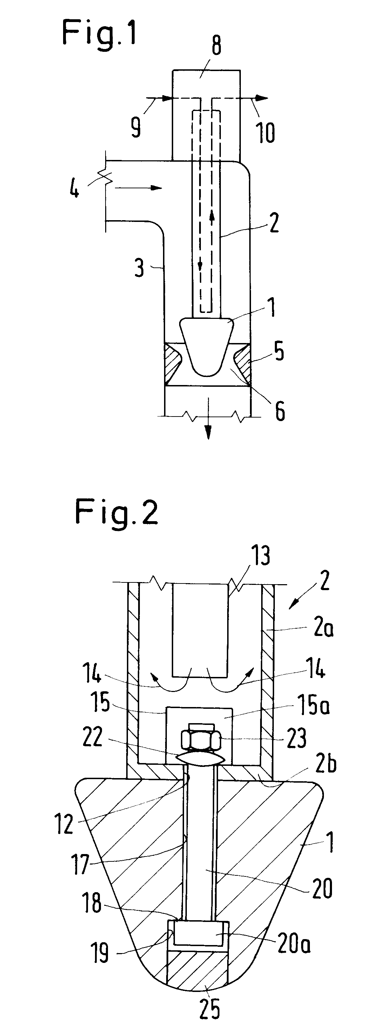

Gemäß Fig. 1 befindet sich der Regelspieß, der aus dem Kopf (1) und dem Schaft (2) besteht, mit senkrechter Achse in einem Kanal (3). Der Kanal weist einen Gaseinlaß (4) auf, durch den heiße, staubhaltige Gase herangeführt werden. Die Gase haben relativ hohe Temperaturen im Bereich von etwa 400 bis 1200°C und vorzugsweise mindestens 600°C, ihr Staubgehalt kann im Bereich von 50 bis 500 g/Nm³ und vorzugsweise bei mindestens 100 g/Nm³ liegen. Der Gasdruck liegt zumeist im Bereich von 1 bis 50 bar und vorzugsweise oberhalb von 10 bar.

Im Kanal (3) befindet sich ein Schließring (5), dessen Öffnung einen kreisförmigen Durchlaß (6) bildet. Dieser Durchlaß wird durch das Auf- und Abbewegen des Regelspießes verschlossen und in regelbarer Weise geöffnet, wobei sich der Kopf (1) im Bereich des Durchlasses bewegt. Der Kopf (1) sowie auch der Schließring (5) sind vorzugsweise aus temperatur- und verschleißfestem Material hergestellt, z.B. aus Keramik oder gehärtetem Stahl.

Die Bewegung des Regelspießes erfolgt durch einen nicht näher dargestellten Antrieb, der sich im Gehäuse (8) befindet. Kühlwasser wird in der Leitung (9) herangeführt, fließt durch den Schaft (2) und zurück und wird in der Leitung (10) abgeführt.

Mit Hilfe der Fig. 2 werden Einzelheiten des Kopfes (1) und des Schafts (2) des Regelspießes erläutert. Der Schaft (2) wird durch ein Rohr (2a) mit einem Boden (2b) gebildet. Der Boden weist in der Mitte eine Bohrung (12) auf. Koaxial mit dem Schaftrohr (2a) verläuft ein Kühlwasserrohr (13), welches von außen Kühlwasser bis in die Nähe des unteren Endes des Schaftes leitet, wo es, wie durch die Pfeile (14) angedeutet, ausströmt und im Ringbereich zwischen dem Rohr (2a) und der Leitung (13) nach oben abfließt. Dabei wird auch ein flüssigkeitsdichtes Gehäuse (15) gekühlt, das sich über der Bohrung (12) befindet.

Der etwa kegelstumpfförmige Kopf (1) des Regelspießes ist federnd verspannt mit dem Schaft (2) verbunden, so daß ihm eine gewisse Beweglichkeit gegenüber dem Schaft bleibt. Der Kopf (1) weist eine zentrale Bohrung (17) auf, die am unteren Ende über eine Schulter (18) in eine Erweiterung (19) übergeht. In der Bohrung (17) sitzt ein Spannbolzen (20), dessen erweiterter Kopf (20a) an der Schulter (18) anliegt und dessen oberes Ende durch die Bohrung (12) hindurchgeführt ist. Nach Einbau des Spannbolzens (20) wird die Erweiterung (19), z.B. durch eine eingeklebte Keramik-Füllung (25), verschlossen.

Am oberen Ende, das sich in der durch das Gehäuse (15) gebildeten Kammer (15a) befindet, weist der Spannbolzen (20) ein nicht dargestelltes Gewinde auf. Auf diesem Gewindeteil befinden sich eine Tellerfeder (22) und eine Mutter (23), wobei die Feder (22) durch die Mutter (23) gegen den Boden (2b) des Schaftes gepreßt ist. Auf diese Weise können sich die Achsen von Kopf (1) und Schaft (2) etwas gegeneinander verschieben und auch von der Parallelität abweichen. Dies begünstigt das rasche Verschließen des Kanals (3) durch Abwärtsführen des Regelspießes, weil der Kopf durch seine Beweglichkeit im Durchlaß (6), vgl. Fig. 1, sofort seinen passenden Sitz findet. Auch läßt es diese Anordnung zu, daß sich der Kopf (1) gegen den Schaft (2) um eine senkrechte Achse dreht. Kopf (1) und Schaft (2) können aus unterschiedlichen Materialien mit unterschiedlichen Wärmeausdehnungskoeffizienten hergestellt sein, da keine starre Verbindung besteht.

## Patentansprüche

1. Regelspieß zum Schließen und regelbaren Öffnen eines Durchlasses (6) in einem ein staubhaltiges Gas mit Temperaturen von etwa 400 bis 1200° C führenden Kanal (3), wobei der Regelspieß einen in Längsrichtung bewegbaren Schaft (2) und einen etwa kegelstumpfförmigen, mit dem Durchlaß zusammenwirkenden Kopf (1) aufweist, der am Schaftende bewegbar angeordnet ist, dadurch gekennzeichnet, daß das Schaftende einen Boden (2b) aufweist, daß der Kopf (1) federnd verspannt an der Außenseite des Bodens anliegt und daß der Bodenbereich des Schaftes eine Kammer (15a) aufweist, in welcher sich ein Ende eines vom Kopf ausgehenden Spannbolzens (20) und eine mit dem Spannbolzen zusammenwirkende Feder (22) befinden, wobei sich die Feder gegen den Spannbolzen und gegen die Innenseite des Bodens (2b) abstützt.

2. Regelspieß nach Anspruch 1, dadurch gekennzeichnet, daß die Feder als Tellerfeder (22) ausgebildet ist.

3. Regelspieß nach Anspruch 1 oder 2, dadurch gekennzeichnet, daß der Schaft (2) hohl und von Kühlflüssigkeit durchströmbar ausgebildet ist.

4. Regelspieß nach Anspruch 1 oder einem der folgenden, dadurch gekennzeichnet, daß der Kopf (1) aus Keramik oder gehärtetem Stahl besteht.

## Claims

1. A control bar for the closing and controllable opening of a passage (6) in a duct (3) carrying a dust-containing gas at temperatures of about 400 to 1200° C, the control bar having a shank (2) movable in the longitudinal direction and a head (1) which is approximately in the shape of a truncated cone and which co-operates with the passage, which head is movably arranged on the end of the shank, characterised in that the end of the shank has a base (2b), that the head (1) lies, resiliently braced, on the outside of the base, and that the base region of the shank has a chamber (15a) in which an end of a tension rod (20) starting from the head and a spring (22) which co-operates with the tension rod are located, the spring being supported against the tension rod and against the inside of the base (2b).

2. A control bar according to Claim 1, characterised in that the spring is designed as a plate spring (22).

3. A control bar according to Claim 1 or 2, characterised in that the shank (2) is hollow and is designed so that cooling fluid can flow through it.

4. A control bar according to Claim 1 or one of the following claims, characterised in that the head (1) is made of ceramic or hardened steel.

## Revendications

1. Aiguille de réglage pour fermer et ouvrir de manière réglable un passage (6) d'un canal (3) dans lequel passe un gaz poussiéreux à des températures de 400 à 1200°C environ, l'aiguille de réglage comportant un fût (2) mobile en direction longitudinale et une tête (l) sensiblement tronconique coopérant avec le passage et montée mobile à l'extrémité du fût, caractérisée en ce que l'extrémité du fût comporte un fond (2b), en ce que la tête (1) s'applique en étant bloquée élastiquement à la face extérieure du fond et en ce que la zone du fond du fût comporte une chambre (15a) dans laquelle se trouve une extrémité d'une goupille (20) de serrage issue de la tête et un ressort (22) coopérant avec la goupille de serrage, le ressort s'appuyant sur la goupille de serrage et sur la face intérieure du fond (2b).

2. Aiguille de réglage suivant la revendication 1, caractérisée en ce que le ressort est constitué sous la forme de ressort (22) à disque.

3. Aiguille de réglage suivant la revendication 1 ou 2, caractérisée en ce que le fût (2) est creux et peut être parcouru par du liquide de refroidissement.

4. Aiguille de réglage suivant la revendication 1 ou l'une des suivantes, caractérisée en ce que la tête (1) est en céramique ou en acier trempé.
